Europäisches Patentamt

European Patent Office

Office européen des brevets

(11) Publication number: **0 151 045**
A2

# EUROPEAN PATENT APPLICATION

(21) Application number: **85300679.9**

(22) Date of filing: **31.01.85**

(51) Int. Cl.⁴: **F 24 J 2/06**

(30) Priority: **02.02.84 US 576188**

(43) Date of publication of application: **07.08.85**
**Bulletin 85/32**

(84) Designated Contracting States: **DE FR GB**

(71) Applicant: **THE BABCOCK & WILCOX COMPANY,
1010 Common Street P.O. Box 60035, New Orleans
Louisiana 70160 (US)**

(72) Inventor: **Edwards, Gerald T., 735 Sherman Drive,
Lynchburg Virginia 24502 (US)**
Inventor: **Schluderberg, Donald C., 2112 Woodcrest
Avenue, Lynchburg Virginia 24503 (US)**

(74) Representative: **Cotter, Ivan John et al, D. YOUNG &
CO. 10 Staple Inn, London WC1V 7RD (GB)**

(54) **Solar receiver absorbers.**

(57) A solar receiver includes a panel having a plurality of absorbers, each composed of a multisided block (50) which includes an insert received in a bore (51) extending through the block. Opposing faces of the bore (51) and insert are fluted with a plurality of grooves (52, 61) which extend either in spiral paths of different pitches or in rotationally opposite curvilinear paths to define flow channels through the absorber. Radiant energy is absorbed through the absorbers and transferred to solid particulates which pass through the flow channels.

1

## SOLAR RECEIVER ABSORBERS

This invention relates to solar receiver absorbers.

A favoured approach suggested for the use of solar radiation in power generation envisages the employment of a central power tower, i.e. a solar receiver mounted at the top of a tall tower which is centrally located in a ground-level field of individually guided and controlled mirrors called heliostats. The heliostats track the sun and reflect its rays to the receiver, which absorbs the concentrated energy. Thus, the receiver takes the place of a fossil boiler or a reactor core in a conventional power plant. The central power tower is typically associated with means for transferring the heat to a turbogenerator or for use in process heat applications, and may also be associated with the transfer of heat to a thermal storage element to store thermal energy for use at night and on cloudy days.

Receiver designs which utilise well-developed commercial water and steam technology as the circulating coolant provide low technical risks in the development of solar power plants. However, the use of solid thermal carrier media has the potential of offering significant advantages in net system efficiency, particularly when storage is used.

The great potential advantage of applying moving bed technology to a solar power plant design may be realised if such a design can practically utilise the higher storage and operating temperatures potentially possible with moving bed material. This means that solid thermal carriers must be used as a solar receiver coolant as well as a thermal storage and heat transport material. Solar receivers must be designed so as efficiently to accommodate the solid thermal carriers.

Solid thermal carrier receivers are classified as either external designs or cavity designs. The receivers may be further classified into the categories of free fall designs and mechanically constrained designs. In a free fall design, the solid heat carrier media falls through a vertically elongate receiver under the influence of gravity alone; the only constraint being aerodynamic drag. In mechanically constrained designs, the solid heat carrier media residence time in the receiver is increased by mechanically constraining the flow of the media.

The invention provides a solar receiver absorber composed of a multisided block which includes an open-ended bore which extends between opposed ends of the block, an insert received within the bore, the block having a wall surface bounding the bore with a plurality of grooves extending from the top to the bottom opening, the insert also being provided with a plurality of substantially parallel grooves, and the laterally facing grooves forming flow channels. In use, refractory particles such as sand may pass through the channels of the block to become mixed and receive thermal energy as they traverse the length thereof.

The invention also provides a solar receiver absorber comprising a multisided block, opposed ends bounding the sides, the block having a bore extending between the opposed ends and a wall surface surrounding the bore which includes a plurality of substantially parallel grooves therein which extend between the opposed ends, and an elongate insert received within the bore, the insert having a plurality of substantially parallel grooves on the outer longitudinal surface of the insert which extend over the length of the insert in a path such that ridges of the grooves of each of the block and insert cross and engage each other to provide a plurality of crossing channels for flow of refractory particles between the opposed ends of the block.

Also, the invention provides a solar receiver panel comprising at least one vertical stack of such absorbers, the blocks in the vertical stack being aligned to define a continuous flow passage from the uppermost block to the lowermost block.

The invention further provides a solar receiver panel which is formed by arranging a plurality of absorbers in side-by-side and end-to-end abutting relationship with blocks in vertical stacks being aligned so that, in each vertical stack, the channels define a continuous flow passage from the uppermost block to the lowermost block.

Also, the invention provides a solar receiver which has receiver panels composed of absorbers comprising a ceramic block and insert construction cooled by gravity induced flow of a moving bed of solid thermal carriers. The carrier media is thoroughly mixed within the absorber to stabilise temperatures that might otherwise be affected by insolation transients, azimuthal variations and other environmental conditions.

The invention will now be further described, by way of illustrative and non-limiting example, with reference to the accompanying drawings, in which like reference numerals designate like or corresponding parts throughout, and in which:

Figure 1 is a schematic illustration of a solar receiver embodying the invention disposed atop a tower within a field of heliostats and including means for conveying a solid heat transfer media to and from the receiver and a tank for storing the heat transfer media;

Figure 2 schematically illustrates the receiver of Figure 1 in greater detail and includes an inlet chute (partly broken away) and a discharge chute for passing a solid heat carrier media to and from the receiver;

Figure 3 is a top view of the receiver shown in Figure 2 with the inlet chute being partly broken away;

Figure 4 is an enlarged detail view of a receiver panel taken along a view line 4-4 in Figure 3;

Figure 5 is a top view of the part of the receiver panel shown in Figure 4;

Figure 6 is a sectional view of part of the receiver panel of Figure 4 taken along line 6-6 thereof;

Figure 7 is a sectional view of part of the receiver panel of Figure 4 taken along line 7-7 thereof;

Figure 8 is an end view of a solar receiver block embodying the invention;

Figure 9 is a cross-sectional view of the block of Figure 8 taken along a line 9-9 in Figure 8;

Figure 10 is an end view of a block insert rod; and

Figure 11 is a side view of the insert of Figure 10.

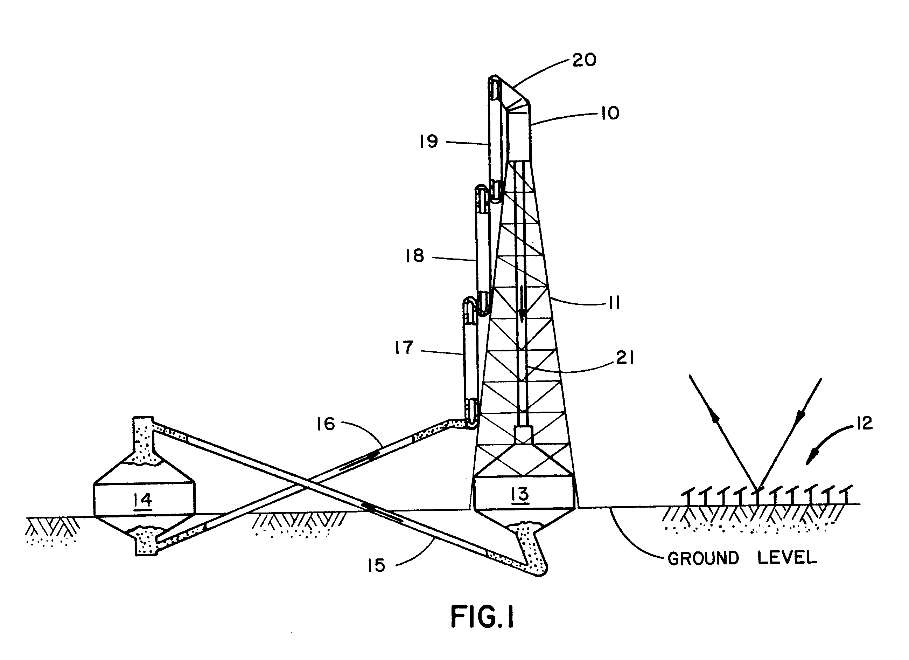

Referring now to the drawings in detail, Figure 1 schematically illustrates a solar receiver 10 mounted at the top of a tower 11 in a field of conventionally arranged ground-level heliostats 12, and a conveying system for conveying a

solid thermal carrier media between the receiver 10, a hot storage tank 13 and a cold storage tank 14. The conveying system shown in Figure 1 comprises a first belt conveyor 15 for transporting the carrier media from the hot storage tank 13 to the cold storage tank 14, a second belt conveyor 16 for transporting the carrier media from the cold storage tank 14 to a vertically interconnected series of bucket elevators 17, 18 and 19, the uppermost one of which discharges the carrier media, via a chute 20, to the solar receiver 10, and a downcomer 21 which returns the carrier media from the receiver 10 to the hot storage tank 13.

As used herein, the term "carrier media" refers generally to solid materials, such as sand or refractory particles, which transport the radiant solar energy. Preferred carrier media materials include aluminium oxide, silica and silicon carbide and other similar materials that are plentiful, low in cost, chemically inert, and non-poisonous.

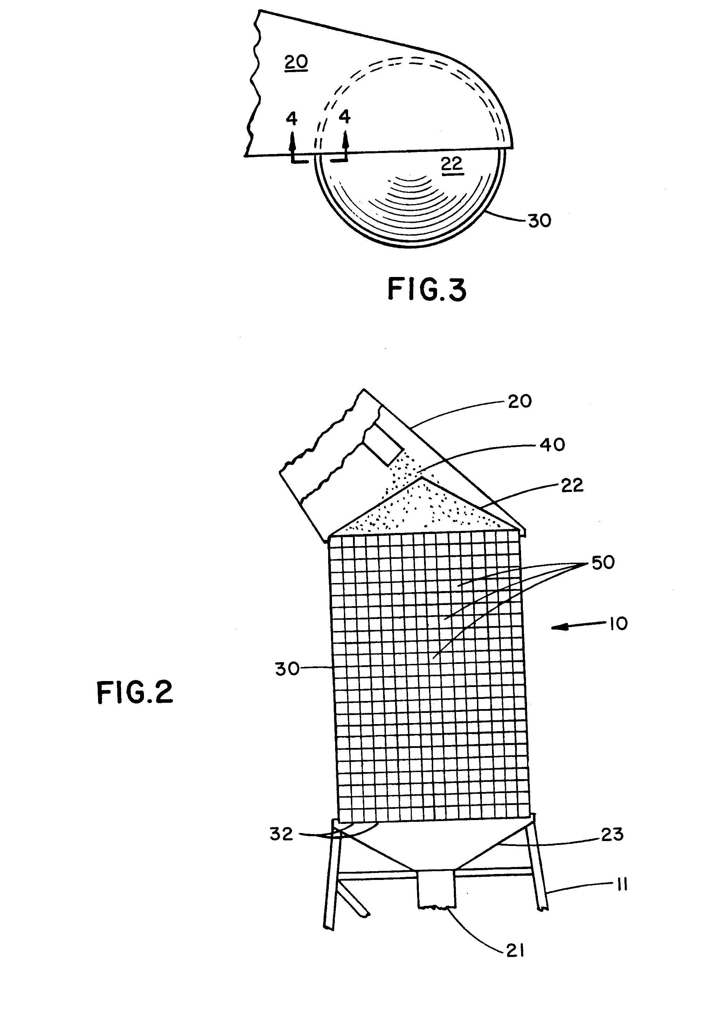

The solar receiver 10, as is best shown in Figures 2 and 3, has an external cylindrical heat absorption surface composed of stacked superposed ceramic blocks 50. The stacks of blocks 50 are arranged in side-by-side relation to form layers made up of parallel rows that extend around the circumference of the receiver. The blocks 50 in the rows are in contiguous abutment.

An inverted conical hood 22 is arranged centrally above the receiver 10 within chute 20. The hood 22 distributes carrier media from chute 20 into tubular inlet nozzles 24 which pass the media into the receiver panel flow channels 55 described hereafter. A bottom hopper 23, internally lined with insulating firebrick 26, collects and directs the media illustrated at 40 from the flow channels 55 into the downcomer 21.

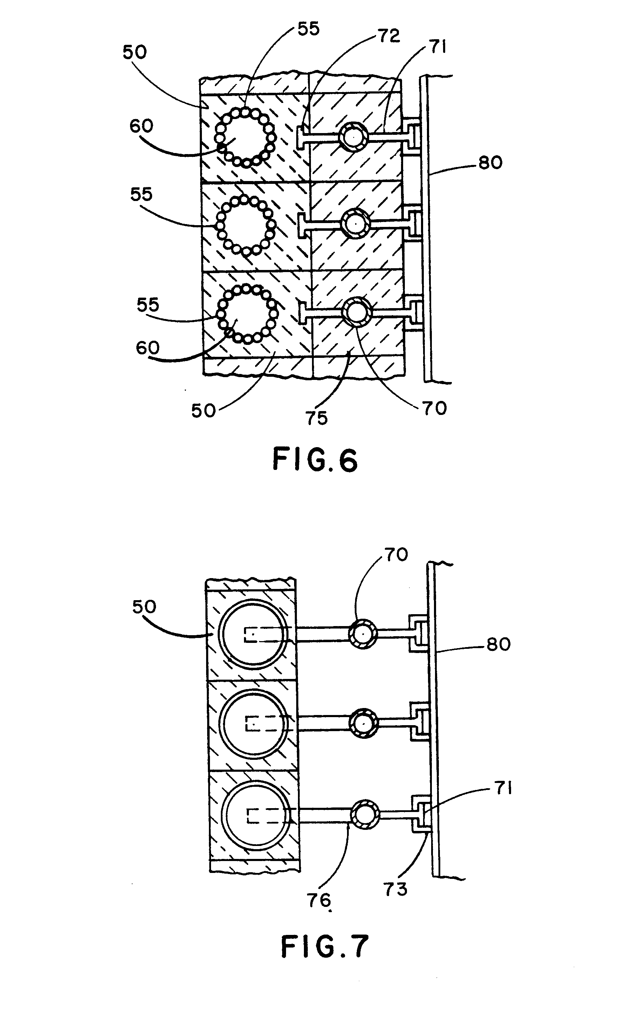

Referring now to Figures 2 and 4-7, a solar receiver panel, indicated by reference numeral 30, comprises an external layer of absorbers internally lined by a fluid cooled wall of blocks 75 which are fixed to a main receiver support structure 80. The stacks of blocks 50 are arranged in side-by-side and end-to-end relation to form layers made up of parallel rows and columns, respectively, that extend around the outer circumference of the receiver 10. The sides of the blocks 50 in the rows, as well as the ends of the blocks in each vertical stack or column, are in contiguous abutment.

Each of the multisided blocks 50 has a bore 51 which extends between the opposed ends of the block which bound the sides. The wall surface which surrounds the bore 51 is formed with a number of slots, flutes, or grooves 52 between ridges 53. The grooves 52 and ridges 53 extend in parallel along a curvilinear path between terminal openings in the opposed ends of the block.

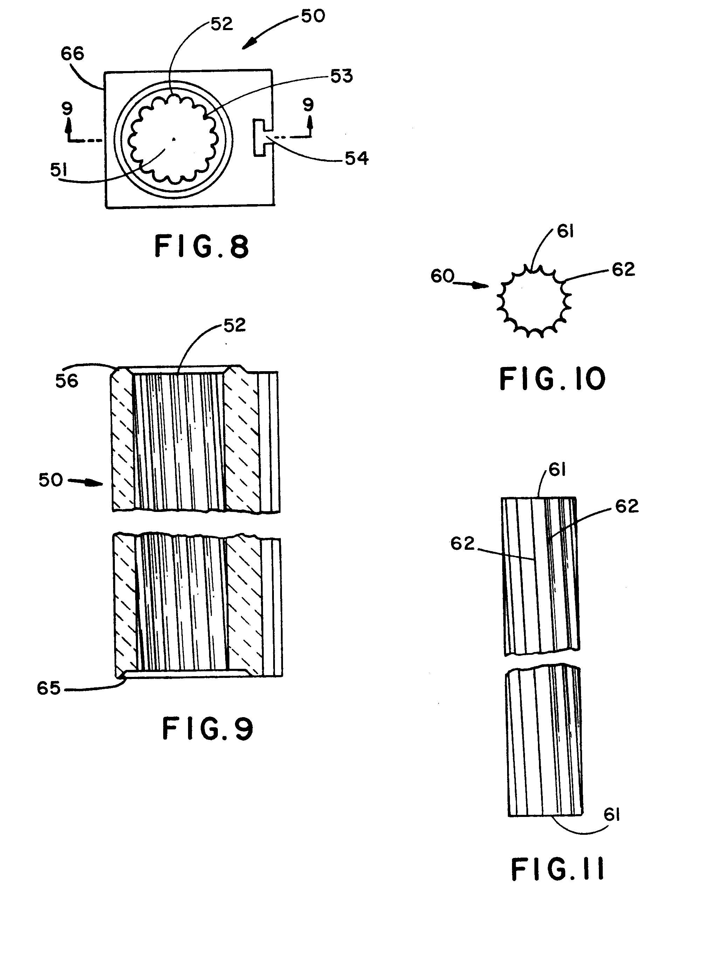

As shown in Figures 8 and 9, the grooves 52 and ridges 53 in the wall surface of the bore 51 of each block 50 are preferably extended in a helical pitch. Each groove 52 is continuous over the length of the bore 51.

In the preferred embodiment, the bore 51 has a circular cross-section and the cross-sectional shape of the grooves 52 is circular.

The block 50 includes an outer slot 54 along its inner side adjacent the fluid cooled wall. The slot 54 extends between the opposed ends of the block. The outer slot 54 has a T-shaped cross-section. As shown in Figures 8 and 9, the bore 51 is oriented off-centre toward the external hot face side 66 of the block, i.e. the side for receiving insolation and which is opposite the side containing outer slot 54.

The lower end of each of the blocks 50 is formed so as to include a circular recess 65 about the bore 51. A circular collar 56 is formed in the upper end and projects above the plane of the upper end. The collar 56 of the block is designed to be closely received and dovetail within the recess 55 of a superposed block. The collar 56 of the uppermost block is circumscribed by the inlet nozzle 24 while the recess of the lowermost block fittingly receives and houses the upper end of an outlet nozzle or is open directly to the hopper 23.

The block 50 is composed of a ceramic material that is highly refractory, that is, its sintering temperature should be greater than the temperature to which it will be subjected. Silica carbide and graphite with a silica carbide coating are preferred materials. The high thermal conductivity of graphite enables the panels to effectively conduct heat to the refractory particles 40 and to withstand the high incident heat flux.

An insert 60, in the form of a rod, is coaxially received within the bore 51 to form an absorber. The insert 60 is provided with a plurality of substantially parallel grooves 61 intermediate ridges 62 on the outer longitudinal surface of the insert. The grooves 61 and ridges 62 extend along a curvilinear path which is of a different pitch or which is rotationally opposite to the curvature of the grooves 52 and ridges 53 of the block 50 between the ends of the insert, that is, between collar 56 and recess 65. The grooves 61 and ridges 62 are preferably helically wound. The heights of the ridges 53 and ridges 62 are such that the ridges 53 and 62 contact when a rod 60 is inserted into the bore 51 of one of the blocks 50.

The ridges and grooves of both the block 50 and insert 60 to define flow channels 55 which cross so that each groove of the insert or block provides lateral communication with a plurality of grooves of the block or insert respectively to provide mixing of the refractory particles as they follow a spiralling path through the block from its upper end to its lower end. The flow channels 55 are designed to permit the flow of the carrier media by gravity from the upper entrance end to the lower outlet end of an absorber and into similar flow channels of an absorber immediately below the outlet. The flow channels 55 in the absorber consist of the semi-circular passages of the grooves 52 and 61 that laterally communicate between cross over points to thereby cause the carrier media to rotate and constantly mix throughout its passage through the channels. The number and cross-sectional shape of the grooves 52 and 61 may vary.

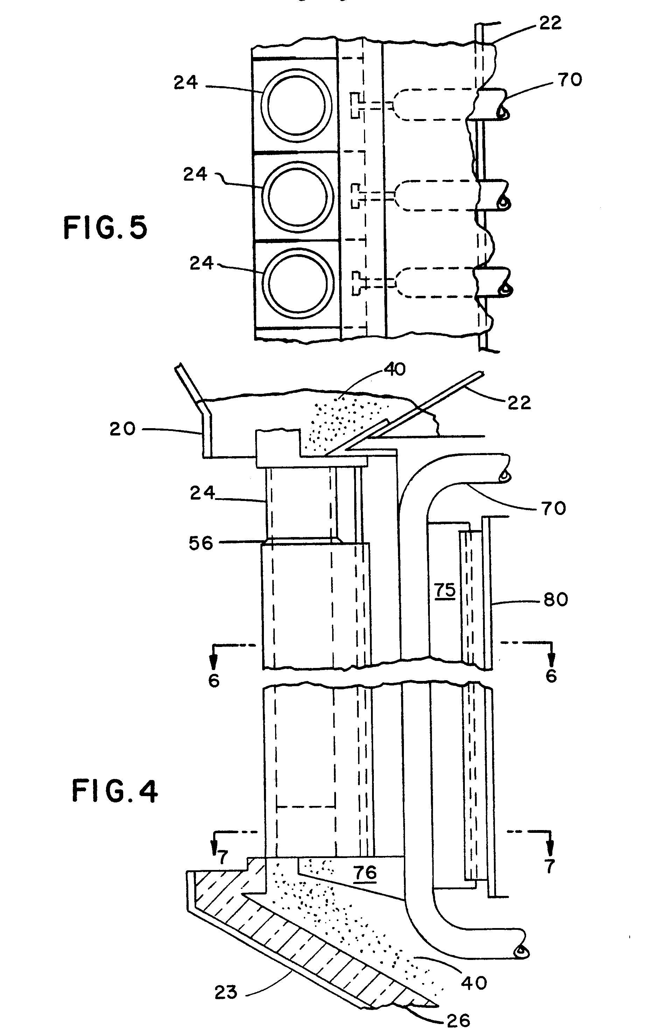

The T-shaped slot 54 of each of the receiver panel blocks 50 receives a T-shaped support member 72 attached to coolant tubes 70 (see Figures 4-7) whereby slot 54 allows for expansions and contractions. The tubes 70, in turn, are positioned by T-shaped support members 71 with interconnect with channels 73 of a main receiver panel support structure 80 whereby the channels 73 also allows for expansions and contractions.

The plurality of water-cooled tubes 70 are disposed in spaced parallel relationship intermediate the stacked absorbers and the main support structure 80. Each of the tubes 70 is aligned with a stack of the absorbers. High temperature shaped insulating blocks 75 are positioned about the tubes 70 to reduce thermal loss from the absorbers to the tubes 70 and to the support structure 80. Each stack of blocks 50 rests upon a lower support bracket 76 which is welded to an adjoining water-cooled support tube 70 at a level below the zone of receiver panel heat input. Thermal expansion of each block stack is accommodated by a conventional slip-joint construction (not shown) located above the zone of heat input. Removable portions of this slip-joint construction are designed to permit easy replacement of damaged blocks in any stack.

In operation, because a large temperature gradient can be maintained across the receiver, the thermal storage material inventory can be minimized. All material lifting is accomplished at relatively low temperatures so that conventional belt conveyor and bucket elevator designs can be used without modification. In addition, the high-temperature storage tank can be internally insulated to permit use of low-alloy construction materials. Efficient energy storage enables round-the-clock operation of chemical processes or extension of power generation into non-daylight hours.

Such a solar receiver as described herein allows the application of moving bed technology to solar power plants. Moving bed particles flowing by gravity inside vertical or near vertical flow channels 55 require or produce no gas pressure differential above or below ambient conditions along the flow paths. This, combined with a typical angle of repose of thirty degrees, means that the bed particles should not leak through small clearances between abutting ends of the blocks 50 to any significant extent. As a consequence, the receiver panel array may be made of short, stacked ceramic sections that are held in place by protected and insulated air-cooled or water-cooled tubes.

Adequate ceramic thermal conductivity needed to handle insolation heat fluxes of approximately $630,900 W/m^2$ ($200,000 Btu/h \cdot ft$ or $BTU/HRft^2$) may be achieved through the use of silicon carbide coated graphite. Such high conductivity material will permit the existence of small local uncooled areas. Some grades of silicon carbide also provide adequate thermal conductivity.

Good materials compatibility, water cooled supports, and high permissible operating temperatures of the ceramic panel and ceramic bed materials are of importance in preventing panel damage due to a temporary loss of cooling. Permissible temporary panel surface temperatures of 1,482 to 1,538°C (2,700 to 2,800°F) should radiate the maximum normal panel heat fluxes without damage.

Flow passages in the receiver panel blocks comprise a ring of 6.35 mm (0.25 in) diameter semicircles which mate (but do not synchronise) with a similar pattern on the periphery of rods inserted in the block holes. These patterns have either different pitches or oppositely rotating helical pitches to cause the refractory particles constantly to mix in each channel as they flow downwardly.

The hot storage tank 13 provides an interface to an electrical power generation system, a process heat application, or the like. The tower 11 supports a solar receiver 10 approximately 91 m (300 ft) above ground level. Moving bed particles flowing down from the receiver converge from the absorber through the hopper 23 to the downcomer 21 which extends downwardly to the hot storage tank 13 at the base of the tower.

The carrier media or moving bed particles then enter a discharge heat exchange (not shown) located beneath the hot storage tank at a temperature of perhaps 718°C (1,325°F) and exit at a temperature of perhaps 163°C (325°F). At this cooler temperature, standard belt conveyors can be used to transmit the solid carrier media, such as sand, to the cold storage tank 14, a distance of perhaps 91 m (300 ft) from the tower 11 based on a maximum inclined angle for a belt conveyor of twenty-two degrees for sand.

From the cold storage tank 14, the carrier media 40 is transmitted by the belt conveyor 16 back towards the tower along a similar incline of twenty-two degrees. The conveyor thereby reaches the tower at a point which is about 18 m (60 ft) from the ground. From this point, the bucket elevators 17 to 19 are used to move the carrier media to the top of the tower 11. Bucket elevators are typically built to a maximum height of 38 m (125 ft). To reach the additional 79 m (260 ft) to the top of the tower, a triple (three assembled together) bucket elevator is required. Two triple stage bucket elevators would be needed to transmit the required 1,829 tonnes (1,800 tons) of carrier media per hour (630 CFM). The carrier media is then run back into the top of the solar receiver to complete the cycle.

It is estimated that a solar power plant having thermal storage to produce six hundred megawatt hours of electrical power could be designed using a solar receiver capable of supplying the required heat at winter solstice conditions on the basis of a receiver discharge temperaure of $718^{\circ}$C ($1,325^{\circ}$F). A discharge heat exchange section (not shown), located directly below the hot storage tank 13, would contain the required economiser, evaporator, and superheater sections needed to provided 12.4 MPa ($1,800$ lbf/in$^2$) steam at $538^{\circ}$C ($1,000^{\circ}$F) to the plant power cycle. The heat exchanger would be designed to cool the solid carrier media to approximately $163^{\circ}$C ($325^{\circ}$F) so that it can be conveyed to the cold storage tank 14 by conventional belt conveyors 15. Similar belt conveyors 16 in combination with the conventional bucket elevators 17 to 19 would be used to lift the cooled stored bed material to the receiver inlet.

The arrangement shown in Figure 1, combined with the high moving bed storage temperatures, is provided to permit generation of all power from storage using a 12.4 MPa absolute ($1,800$ lbf/in$^2$ absolute), $538^{\circ}$C ($1,000^{\circ}$F) steam cycle. More efficient steam cycles operating at higher pressures and incorporating reheat may also be economically justified. Because of the high thermal energy storage temperature difference of 538 deg C (1,000 deg F), the required active storage volume in the hot tank 13 is only about 7,560 m$^3$ (267,000 ft$^3$). This volume allows positioning of the hot tank 13 inside the base of the tower 11 as shown. The tank 13 is internally insulated and has a similar design to that developed for previous lower temperature moving bed thermal storage designs. The suitability of this design for a $718^{\circ}$C ($1,325^{\circ}$F) storage temperature without significant cost increase is unique with moving bed thermal energy storage.

CLAIMS

1. A solar receiver absorber comprising a multisided block (50), opposed ends bounding the sides, the block (50) having a bore (51) extending between the opposed ends and a wall surface surrounding the bore (51) which includes a plurality of substantially parallel grooves (52) therein which extend between the opposed ends, and an elongate insert (60) received within the bore (51), the insert having a plurality of substantially parallel grooves (61) on the outer longitudinal surface of the insert which extend over the length of the insert in a path such that ridges (53, 62) of the grooves (52, 61) of each of the block and insert (50, 60) cross and engage each other to provide a plurality of crossing channels (55) for flow of refractory particles between the opposed ends of the block (50).

2. A solar receiver absorber according to claim 1, wherein each of the grooves (52, 61) of the block (50) and insert (60) follows a helical path.

3. A solar receiver absorber according to claim 1 or claim 2, wherein the block (50) comprises a ceramic material.

4. A solar receiver absorber according to claim 3, wherein the ceramic material is silica carbide.

5. A solar receiver absorber according to claim 3, wherein the ceramic material comprises graphite coated with silica carbide.

6. A solar receiver absorber according to any one of the preceding claims, wherein the cross-sectional shape of each of the channels (55) is circular.

7. A solar receiver absorber according to any one of claims 1 to 6, wherein the bore (51) has a circular cross-section.

8. A solar receiver absorber according to any one of claims 1 to 6, wherein the block (50) includes an outer slot (54) along one side extending between the opposed ends, the outer slot having a T-shaped cross-section, and the bore (51) has a circular cross-section and is disposed off-centre towards the side of the block opposite the outer slot (54).

9.      A solar receiver panel comprising at least one vertical stack of absorbers, each absorber being according to any one of claims 1 to 7, and the blocks (50) in the vertical stack being aligned to define a continuous flow passage from the uppermost block to the lowermost block.

10.      A solar receiver panel according to claim 9, comprising means for insulating one side of the absorbers, the insulating means including a plurality of cooling tubes (70), each of the tubes (70) being disposed in spaced relationship parallel to a stack of the absorbers, a plurality of insulating blocks (75) extending horizontally around the tubes (70), and support elements (72) each of which is secured to a plurality of the blocks in a vertical stack and to an adjacent tube (70).

11.      A solar receiver panel according to claim 9 or claim 10, wherein each of the blocks (50) includes an outer slot (54) along one side, intermediate the sides abutting blocks (50) in adjacent stacks, extending between the opposed ends and aligned with an outer slot (54) in a block (50) immediately below or above the first-mentioned slot (54), and wherein the support element (76) includes an engaging portion which extends through the aligned slots (54) into engagement with the blocks (50) of the stack so as vertically to align the blocks.

12.      A solar receiver panel according to claim 11, wherein the outer slot (54) and the engaging portion of the support element (72) each have a T-shaped cross-section.

13.      A solar receiver panel according to claim 10, comprising means operatively connected to the tubes (70) for vertically supporting the stacks.

14.      A solar receiver including a solar panel comprising a plurality of superposed absorbers each according to any one of claims 1 to 8, the absorbers being arranged in side-by-side and end-to-end abutting relation so as respectively to form layers composed of horizontal rows and vertical stacks, and the blocks (50) in each stack being aligned to define a continuous flow passage from the uppermost block to the lowermost block, and means for passing refractory particles (40) through the channels in the stacks to cause a gravity flow of the refractory particles (40) through the flow channels (55).

FIG.1

**FIG.3**

**FIG.2**

0151045

FIG.5

FIG.4

FIG.6

FIG.7

**FIG.8**

**FIG.9**

**FIG.10**

**FIG.11**